# EUROPEAN PATENT SPECIFICATION

(11) **EP 3 173 748 B1**
(45) Date of publication and mention of the grant of the patent: **22.04.2020**
(21) Application number: 16199403.3
(22) Date of filing: 17.11.2016
(51) Int. Cl.: G01F 1/10, G01F 1/115

(54) **DEVICE FOR VOLUMETRIC MEASUREMENT AND/OR CONTROL OF A FLUID**
VORRICHTUNG ZUR VOLUMETRISCHEN MESSUNG UND/ODER REGLUNG DES DURCHFLUSSES
DISPOSITIF DE MESURE VOLUMETRIQUE ET/OU DE RÉGLAGE D'UN FLUIDE

(30) Priority: 25.11.2015 IT UB20155897
(43) Date of publication of application: 31.05.2017
(73) Proprietor: TP Reflex Group S.p.A., 21040 Venegono Superiore (VA) (IT)
(72) Inventor: LAVAZZA, Alberto, 21010 Cardano al Campo (VA) (IT); ROTTA, Andrea, 22070 Appiano Gentile (CO) (IT)
(74) Representative: Metroconsult Srl

(56) References cited:
- EP-A1- 0 517 293
- EP-A2- 0 599 341
- WO-A2-03/106323
- IT-A1- TO20 100 506
- US-A- 5 929 345
- US-A1- 2004 255 693

## Description

The present invention relates to a device for volumetric measurement and/or control of a fluid, according to claim 1.

In particular, said device can be connected to a fluid supply line for a washing machine.

Therefore, the present invention also relates to a washing machine, in particular for household use, which comprises said device.

Devices are known in the art for volumetric measurement and/or control of liquids and fluids in general flowing through ducts having a predetermined flow rate, to ensure exact control of the quantities of fluid flowing into containers or from a source. Such devices are used, for example, for dosing the water required by washing machines, in particular for household use (such as laundry washing machines and dishwashers), or in water distribution systems, in combination with a meter, and so on.

Some known devices are mainly dedicated to controlling possible leaks or excessive flows of liquid, and therefore do not ensure a very accurate dosage; usually these devices are associated with an electrovalve that either allows or stops the flow, said electrovalve being normally open and being only closed when the device for volumetric fluid measurement and/or control detects an anomalous flow.

Other known devices for volumetric measurement and/or control are designed to include a flow meter consisting of a tangential impeller, i.e. an impeller having an axis of rotation arranged substantially perpendicular to the direction of the flow to be measured and/or controlled; said tangential impeller is provided with metal inserts, and the device comprises a sensor for detecting the passage of such inserts, i.e. the revolutions made by the impeller when it is turned by a fluid flow.

These known devices suffer from some drawbacks, since the use of tangential impellers does not always ensure high precision; in addition, the use of such tangential impellers makes the entire volumetric control device complex, bulky, expensive and difficult to maintain and repair.

The devices disclosed in documents US-A-5.007.453 and US-A-4.428.088 are examples of the above-mentioned prior art.

Devices for volumetric measurement and/or control are also known in the art which are so conceived as to include a flow meter consisting of an axial impeller, i.e. an impeller the axis of rotation of which is coaxial to the direction of the flow to be measured or controlled; for example, a device comprising an axial impeller is shown in documents EP0299341A2, WO03/106323A2 and EP0517293A1.

ITTO20100506 A1 relates to a flow meter for a refrigerator, wherein the meter impeller presents helical blades. It also discloses a diffuser having circular ducts and an helical trajectory. However the number of ducts is lower than the number of blades. US 2004/255693 A1 relates to a flow meter, wherein the meter impeller presents blades. The diffuser (distributor) comprises twisted blades, which are narrowing toward the impeller. The number of passages is lower than the number of blades. However, also those known devices that comprise an axial impeller suffer from a few drawbacks, since such devices are too sensitive to pressure and/or flow variations of the fluid to be measured or controlled, this sensitivity not allowing for effective and accurate measurement and/or control of said fluid flow.

It is also well known that prior-art devices suffer from many problems caused by incorrect incidence of the fluid flow to be measured and/or controlled on the impeller, leading to undesired creation of turbulences at the inlet and/or outlet of the flow meter, resulting in pressure drops, especially at low pressures. Inevitably, these drawbacks adversely affect the behaviour and proper operation of the device.

Moreover, the devices known in the art are often subject to malfunctions caused by the possible presence of impurities in the fluid flow to be measured or controlled.

In this frame, it is the main object of the present invention to provide a device for volumetric measurement and/or control of a fluid and a related washing machine comprising said device, which are so realized as to overcome the drawbacks of the prior art.

It is another object of the present invention to provide a device for volumetric measurement and/or control of a fluid which is sufficiently accurate in various operating conditions, at high and low pressures, also with different flow rates. It is a further object of the present invention to provide a device for volumetric measurement and/or control of a fluid which can ensure optimal operation even in the presence of large amounts of impurities, and which is simple, economical and as small as possible.

Said objects are achieved by the present invention through a device for volumetric measurement and/or control of a fluid, and a related washing machine, incorporating the features set out in the appended claims, which are an integral part of the present description.

Further objects, features and advantages of the present invention will become apparent from the following detailed description and from the annexed drawings, which are supplied by way of non-limiting explanatory example, wherein:
- Figs. 1a and 1b show, respectively, a perspective view and a sectional view of a device for volumetric measurement and/or control of a fluid according to the present invention;
- Fig. 2 is an exploded view of the device of Figs. 1a and 1b;
- Figs. 3a and 3b show, respectively, a top view of a component of the device for volumetric measurement and/or control of a fluid according to the present invention and a sectional view along a line L-L of the component of Fig. 3a.

Said description and said drawings are to be considered as non-limiting explanatory examples.

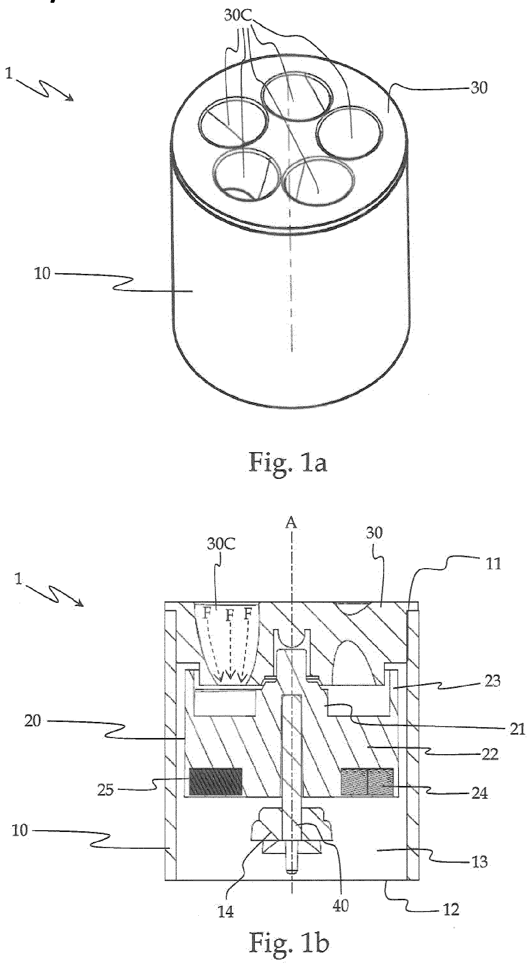

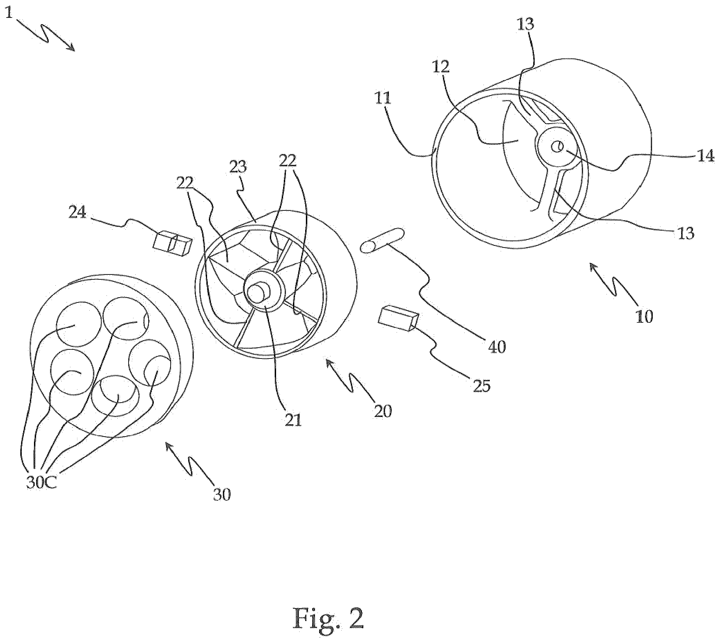

In Figures 1a to 2b, reference numeral 1 designates as a whole a device for volumetric measurement and/or control of a fluid (indicated as F in Fig. 1b) according to the present invention.

In the following description, reference will mostly be made to the fact that the device 1 is preferably adapted to be associated with a washing machine, in particular for household use (not shown in the drawings), but the present invention is not strictly limited to such an apparatus or machine.

The device 1 comprises a substantially tubular body 10 comprising a first portion 11 for the inlet of the fluid F into the body 10 and a second portion 12 for the outlet of said fluid F from the body 10. In a preferred embodiment, said first portion 11 can be associated with, for example, a tap (not shown in the drawings) of the water main, and said second portion 12 can be associated with, for example, a washing machine (not shown in the drawings). Of course, said first portion 11 and said second portion 12 may be associated with the water main and with a washing machine, respectively, through additional elements not shown in the annexed drawings. It should be noted that said body 10 may be a part of another component, such as, for example, a portion of an electrovalve (not shown in the drawings).

In a preferred embodiment, said body 10 comprises at least one pair of supporting elements 13 extending radially within said body 10, in particular near said second portion 12, and converging towards a central portion 14 of the body 10.

The device 1 comprises also an axial impeller 20 positioned in said body 10 in such a way that its axis of rotation A is substantially coaxial to the direction of the flow of fluid F to be measured or controlled, which flows from said first portion 11 to said second portion 12 within the body 10.

It should be noted that said axis of rotation A of the impeller 20 substantially coincides with an axis A of the device 1.

Said impeller 20 comprises a central core 21 from which a plurality of blades 22 extend. In particular, said blades 22 are of the helical type; also, they extend radially from the central core 21 and are joined in their outer part (i.e. that part of the blades 22 which is farthest from the central core 21) by a ring 23. Preferably (as is particularly visible in Fig. 1b), the diameter of the impeller 20 is such as to determine the presence of a free passage between the ring 23 and the body 10 that houses it; said free passage is useful to promote the free rotation of the impeller 20 and to prevent the impeller 20 from seizing in the presence of small impurities.

Moreover, the ring 23 prevents any lateral leaks of fluid F, particularly in the region comprised between the outer ends of the blades 22 and the cylindrical body 10 within which the impeller 10 can rotate freely; therefore, said ring 23 is useful to avoid possible efficiency losses in the detection of the flow of fluid F. The device 1 further comprises a diffuser 30 arranged above the impeller 20 with respect to the flow of fluid F, said diffuser 30 being adapted to convey the flow of fluid F towards the blades 22 of the impeller 20. As is particularly visible in Figure 1b, said diffuser 30 is associated with the body 10 in proximity to said first portion 11.

Preferably, the body 10 and the diffuser 30 are so shaped as to engage with each other, in particular by means of mutual fitting means (not shown in detail in the annexed drawings), thus forming, together with the impeller 20, a single compact structure that allows the various components to be pre-assembled easily and accurately. As a result, said compact structure facilitates the insertion of the device 1 into any duct or the like, wherever volumetric measurement and/or control of a flow of fluid is required.

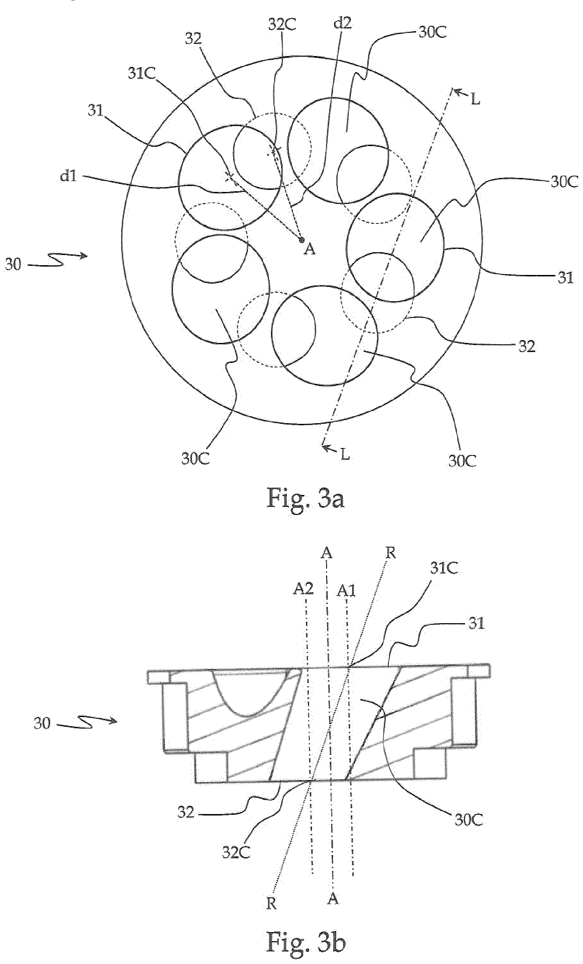

Figure 3a shows a top view of the diffuser 30, whereas Figure 3b shows a sectional view along a line L-L (represented by means of a dashed-dotted line in Fig. 3a) of the diffuser 30 of Figure 3a.

As is particularly visible in such Figures, according to the present invention said diffuser 30 comprises a plurality of ducts 30C, each duct 30C having a substantially circular section and a substantially helical trajectory (i.e. development).

Said substantially circular section of at least one duct 31 can be appreciated in a plan view of the diffuser 30, i.e. a view essentially coinciding with the axis of rotation A of the impeller 20 and with the axis A of the device 1.

In particular, said at least one duct 30C comprises a first section 31 for the inlet of the flow of fluid F into said duct 30C and a second section 32 for the outlet of the flow of fluid F from said duct 30C, said duct 30C getting progressively narrower in the part comprised between said first section 31 and said second section 32 (which are substantially perpendicular to the axis A of the device 1). In fact, as is particularly visible in Fig. 3b, the area of the first section 31 of the duct 30C is greater that the area of the second section 32 of said duct 30C. Moreover, said first section 31 has a first centre 31C lying on a first axis A1, whereas said second section 32 has a second centre 32C lying on a second axis A2, said first axis A1 and second axis A2 being substantially parallel to the axis A of the device 1. This means that, in a side view of the diffuser 30 (such as, for example, the section of Figure 3b), a straight line R passing through said first centre 31C and second centre 32C is incident on said axis A of the device 1.

It should be noted that in Figure 3b said straight line R is indicated as a dotted line.

Figure 3a also shows that said first centre 31C lies at a first distance d1 from the axis A of the device 1 and said second centre 32C lies at a second distance d2 from said axis A of the device 1; in a preferred embodiment, said first distance d1 is substantially equal to said second distance d2.

In a preferred embodiment, all the ducts 30C of the diffuser 30 are made in substantially the same manner; it is however possible that at least one duct 30C is made differently than described in the present invention.

The particular shape of the diffuser 30 according to the present invention allows realizing a device 1 for volumetric measurement and/or control of a fluid F which is very accurate in various operating conditions, at high and low pressures, also with different flow rates of the fluid F.

In particular, the peculiar realization of the ducts 30C allows obtaining a device 1 for volumetric measurement and/or control of a fluid F that features improved reading linearity characteristics and which can detect the flow of fluid F with an optimal tolerance, while remaining essentially insensitive to pressure and/or flow variations.

As a matter of fact, this particular configuration of the ducts 30C forces the flow of fluid F to divide and follow definite paths, so that every single flow thus obtained will hit the blades 22 of the impeller 20 at an exact angle and at a precise and predetermined distance from the axis of rotation A of the impeller 20.

Also, the provisions of the present invention allow providing a device 1 that can ensure optimal operation even in the presence of some impurities.

The device 1 according to the present invention is also simple, economical and small.

The number of said plurality of ducts 30C and the number of said plurality of blades 22 are different and do not have a common denominator; said plurality of ducts 30C comprises a number of ducts 30C which is greater than the number of blades 22; preferably, said plurality of ducts 30C comprises a number of ducts 30C which exceeds the number of blades 22 by one unit (so as to satisfy the following relation: N=n+1, where "N" is the number of ducts 30C and "n" is the number of blades 22).

This provision allows obtaining a constant revolution speed of the impeller 20 and avoiding that said impeller 20 might stall.

As can be seen in the annexed drawings, the device 1 comprises a pin 40 associated with the central core 21 of the impeller 20 and with the central portion 14 of the body 10, said pin 40 being adapted to allow the impeller 20 to turn. In the example shown in the annexed drawings, the pin 40 is represented as a separate element; it is however clear that it may be made as one piece with the impeller 20 or with said central portion 14 of the body 10.

The device 1 according to the present invention further comprises detection means 24 associated with the impeller 20, which allow counting the revolutions of said impeller 20 as the fluid F flows through.

In particular, said detection means may comprise at least one magnetic element 24 associated with the impeller 20; for example, said at least one magnetic element 24 may be associated with at least one of said blades 22 or with the ring 23 of the impeller 20; in this case, said detection means will comprise a detection unit (not shown in the drawings), located externally to the body 10 of the device 1, in particular aligned with said at least one magnetic element 24 of the impeller 20, so as to be able to detect the passage thereof and count the revolutions of said impeller 20.

It is clear that, in accordance with the present invention, said detection means 24 may also comprise optical elements (not shown in the drawings) adapted to be detected by a suitable detection unit (also not shown in the drawings).

The device 1 may also comprise at least one counterweight 25 associated with the impeller 20 in order to balance the weight of said at least one magnetic element 24 and allow the impeller 20 to move and turn adequately when the blades 22 are hit by the flow of fluid F.

The features and advantages of the device 1 according to the present invention and of the related washing machine are apparent from the above description.

In particular, the provision of the diffuser 30 according to the present invention allows realizing a device 1 for volumetric measurement and/or control of a fluid F which is very accurate in various operating conditions, at high and low pressures, also with different flow rates of the fluid F.

In particular, the peculiar configuration of the ducts 30C allows obtaining a device 1 for volumetric measurement and/or control of a fluid F that features improved reading linearity characteristics, said configuration of the ducts 30C making it possible to detect the flow of fluid F with an optimal tolerance, while remaining essentially insensitive to pressure and/or flow variations. Furthermore, the provisions of the present invention allow providing a device 1 that can ensure optimal operation even in the presence of impurities, while being simple, economical and small.

The arrangement and number of ducts 30C allow obtaining a constant revolution speed of the impeller 20, so as to avoid that said impeller 20 might stall.

A further advantage of the device 1 according to the present invention is due to the fact that the body 10 and the diffuser 30 are so shaped as to engage with each other, in particular by means of mutual fitting means (not shown in detail in the annexed drawings), thus forming, together with the impeller 20, a single compact structure that allows the various components to be pre-assembled easily and accurately. As a result, said compact structure facilitates the insertion of the device 1 into any duct or the like, wherever volumetric measurement and/or control of a flow of fluid is required.

However, it can be easily understood that the present invention is not limited to the above-described device and washing machine, but may be subject to many modifications, improvements or replacements of equivalent parts and elements without departing from the inventive idea, as clearly specified in the following claims.

## Claims

1. Device (1) for volumetric measurement and/or control of a fluid (F) in a washing machine, in particular for household use, said device (1) being of the type comprising:
- a substantially tubular body (10), said body (10) comprising a first portion (11) for the inlet of the fluid (F) into the body (10) and a second portion (12) for the outlet of said fluid (F) from the body (10);
- an impeller (20) positioned in said body (10) in such a way as to have an axis of rotation (A) substantially coaxial to the direction of the flow of fluid (F) to be measured or controlled, which flows from said first portion (11) to said second portion (12) within the body (10), said axis of rotation (A) substantially coinciding with an axis (A) of the device (1), wherein said impeller (20) comprises a central core (21) from which a plurality of blades (22) extend, in particular said blades (22) being of the helical type;
- a diffuser (30) arranged above the impeller (20) with respect to the flow of fluid (F), said diffuser (30) being adapted to convey the flow of fluid (F) towards the blades (22) of the impeller (20),
wherein said diffuser (30) comprises a plurality of ducts (30C), each duct (30) of said plurality of ducts (30C) having a substantially circular section and a substantially helical trajectory,
**characterized in that**
the number of said plurality of ducts (30C) and the number of said plurality of blades (22) are different, wherein said plurality of ducts (30C) comprises a number of ducts (30C) which is greater than the number of blades (22), in particular said plurality of ducts (30C) comprising a number of ducts (30C) which exceeds the number of blades (22) by one unit.

2. Device (1) according to claim 1, **characterized in that** said at least one duct (30C) comprises a first section (31) for the inlet of the flow of fluid (F) into said duct (30C) and a second section (32) for the outlet of the flow of fluid (F) from said duct (30C), said duct (30C) getting progressively narrower in the part comprised between said first section (31) and said second section (32).

3. Device (1) according to claim 2, **characterized in that** the area of the first section (31) of the duct (30C) is greater than the area of the second section (32) of said duct (30C).

4. Device (1) according to one or more of claims 2 and 3, **characterized in that** said first section (31) has a first centre (31C) lying on a first axis (A1), whereas said second section (32) has a second centre (32C) lying on a second axis (A2), said first axis (A1) and second axis (A2) being substantially parallel to the axis (A) of the device (1).

5. Device (1) according to one or more of claims 2 to 4, **characterized in that**, in a side view of the diffuser (30), a straight line (R) passing through said first centre (31C) and second centre (32C) is incident with respect to said axis (A) of the device (1).

6. Device (1) according to one or more of the preceding claims, **characterized in that** said first centre (31C) lies at a first distance (d1) from the axis (A) of the device (1) and said second centre (32C) lies at a second distance (d2) from said axis (A) of the device (1), in particular said first distance (d1) being substantially equal to said second distance (d2).

7. Device (1) according to one or more of the preceding claims, **characterized in that** all the ducts (30C) of said plurality of ducts (30C) are made in substantially the same manner.

8. Device (1) according to claim 1, **characterized in that** said blades (22) extend radially from the central core (21) and are joined in their outer part by a ring (23).

9. Device (1) according to claim 8, **characterized in that** the diameter of the impeller (20) is such as to determine the presence of a free passage between the ring (23) and the body (10).

10. Device (1) according to one or more of the preceding claims, **characterized in that** said diffuser (30) is associated with the body (10) in proximity to said first portion (11).

11. Device (1) according to one or more of the preceding claims, **characterized in that** the body (10) and the diffuser (30) are so shaped as to engage with each other, in particular through mutual fitting means, thus forming a single compact structure together with the impeller (20).

12. Device (1) according to one or more of the preceding claims, **characterized in that** it comprises detection means (24) associated with the impeller (20), which allow counting the revolutions of said impeller (20) as the fluid (F) flows through.

13. Washing machine, in particular for household use, which comprises a device (1) according to one or more of the preceding claims 1 to 12.

## Patentansprüche

1. Vorrichtung (1) zur volumetrischen Messung und/oder Steuerung eines Fluids (F) in einer Waschmaschine, insbesondere für den Haushaltsgebrauch, wobei die Vorrichtung (1) von der Art ist, die umfasst:
- einen im Wesentlichen rohrförmigen Körper (10), wobei der Körper (10) einen ersten Abschnitt (11) für den Einlass des Fluids (F) in den Körper (10) und einen zweiten Abschnitt (12) für den Auslass des Fluids (F) aus dem Körper (10) umfasst;
- einen Impeller (20), der in dem Körper (10) derart positioniert ist, um eine Rotationsachse (A) aufzuweisen, die im Wesentlichen koaxial zur Richtung des Flusses des zu messenden oder zu steuernden Fluids (F) ist, das vom ersten Abschnitt (11) zum zweiten Abschnitt (12) innerhalb des Körpers (10) fließt, wobei die Rotationsachse (A) im Wesentlichen mit einer Achse (A) der Vorrichtung (1) übereinstimmt, wobei der Impeller (20) einen zentralen Kern (21) aufweist, von dem sich mehrere Blätter (22) erstrecken, wobei insbesondere die Blätter (22) schraubenartig sind;
- einen Diffusor (30), der bezogen auf den Fluss des Fluids (F) über dem Impeller (20) angeordnet ist, wobei der Diffuser (30) angepasst ist, den Fluss des Fluids (F) in Richtung auf die Blätter (22) des Impellers (20) zu leiten,
wobei der Diffusor (30) mehrere Kanäle (30C) aufweist, wobei jeder Kanal (30) der mehreren Kanäle (30C) einen im Wesentlichen kreisförmigen Querschnitt und einen im Wesentlichen schraubenförmigen Verlauf aufweisen,
**dadurch gekennzeichnet, dass**
die Anzahl der mehreren Kanäle (30C) und die Anzahl der mehreren Blätter (22) unterschiedlich sind, wobei die mehreren Kanäle (30C) eine Anzahl von Kanälen (30C) aufweisen, die größer als die Anzahl der Blätter (22) ist, wobei insbesondere die mehreren Kanäle (30C) eine Anzahl von Kanälen (30C) aufweisen, die die Anzahl der Blätter (22) um eine Einheit übersteigt.

2. Vorrichtung (1) nach Anspruch 1, **dadurch gekennzeichnet, dass** mindestens ein Kanal (30C) einen ersten Abschnitt (31) für den Einlass des Flusses des Fluids (F) in den Kanal (30C) und einen zweiten Abschnitt (32) für den Auslass des Flusses des Fluids (F) aus dem Kanal (30C) aufweist, wobei der Kanal (30C) fortlaufend enger im Teil zwischen dem ersten Abschnitt (31) und dem zweiten Abschnitt (32) wird.

3. Vorrichtung (1) nach Anspruch 2, **dadurch gekennzeichnet, dass** der Bereich des ersten Abschnitts (31) des Kanals (30C) größer als der Bereich des zweiten Abschnitts (32) des Kanals (30C) ist.

4. Vorrichtung (1) nach einem oder mehreren der Ansprüche 2 und 3, **dadurch gekennzeichnet, dass** der erste Abschnitt (31) ein erstes Zentrum (31C) aufweist, das auf einer ersten Achse (A1) liegt, wobei der zweite Abschnitt (32) ein zweites Zentrum (32C) aufweist, das auf einer zweiten Achse (A2) liegt, wobei die erste Achse (A1) und die zweite Achse (A2) im Wesentlichen parallel zur Achse (A) der Vorrichtung (1) sind.

5. Vorrichtung (1) nach einem oder mehreren der Ansprüche 2 bis 4, **dadurch gekennzeichnet, dass** bei einer Seitenansicht des Diffusors (30) eine gerade Linie (R), die das erste Zentrum (31C) und das zweite Zentrum (32C) passiert, bezogen auf die Achse (A) der Vorrichtung (1) einfallend, ist.

6. Vorrichtung (1) nach einem oder mehreren der vorhergehenden Ansprüche, **dadurch gekennzeichnet, dass** das erste Zentrum (31C) bei einer ersten Distanz (d1) von der Achse (A) der Vorrichtung (1) liegt und das zweite Zentrum (32C) bei einer zweiten Distanz (d2) von der Achse (A) der Vorrichtung (1) liegt, wobei insbesondere die erste Distanz (d1) im Wesentlichen gleich der zweiten Distanz (d2) ist.

7. Vorrichtung (1) nach einem oder mehreren der vorhergehenden Ansprüche, **dadurch gekennzeichnet, dass** alle Kanäle (30C) der mehreren Kanäle (30C) in im Wesentlichen der gleichen Weise hergestellt sind.

8. Vorrichtung (1) nach Anspruch 1, **dadurch gekennzeichnet, dass** die Blätter (22) sich radial vom zentralen Kern (21) erstrecken und in ihrem äußeren Teil durch einen Ring (23) verbunden sind.

9. Vorrichtung (1) nach Anspruch 8, **dadurch gekennzeichnet, dass** der Durchmesser des Impellers (20) so ist, um die Anwesenheit eines freien Durchgangs zwischen dem Ring (23) und dem Körper (10) festzulegen.

10. Vorrichtung (1) nach einem oder mehreren der vorhergehenden Ansprüche, **dadurch gekennzeichnet, dass** der Diffusor (30) mit dem Körper (10) nahe des ersten Abschnitts (11) verbunden ist.

11. Vorrichtung (1) nach einem oder mehreren der vorhergehenden Ansprüche, **dadurch gekennzeichnet, dass** der Körper (10) und der Diffusor (30) geformt sind, um ineinander einzugreifen, insbesondere durch wechselseitige Befestigungsmittel, um so eine einzige kompakte Struktur zusammen mit dem Impeller (20) zu bilden.

12. Vorrichtung (1) nach einem oder mehreren der vorhergehenden Ansprüche, **dadurch gekennzeichnet, dass** sie Detektionsmittel (24), die mit dem Impeller (20) verbunden sind, aufweist, die die Umdrehungen des Impellers (20), wenn das Fluid (F) durchfließt, zu zählen.

13. Waschmaschine, insbesondere zum Haushaltsgebrauch, die eine Vorrichtung (1) nach einem oder mehreren der vorhergehenden Ansprüche 1 bis 12 umfasst.

## Revendications

1. Dispositif (1) pour mesure volumétrique et/ou régulation d'un fluide (F) dans une machine à laver, en particulier pour un usage domestique, ledit dispositif (1) étant du type comprenant :
- un corps sensiblement tubulaire (10), ledit corps (10) comprenant une première partie (11) pour l'entrée du fluide (F) dans le corps (10) et une seconde partie (12) pour la sortie dudit fluide (F) du corps (10) ;
- une turbine (20) positionnée dans ledit corps (10) de façon à avoir un axe de rotation (A) sensiblement coaxial à la direction de l'écoulement de fluide (F) devant être mesuré ou régulé, qui s'écoule de ladite première partie (11) à ladite seconde partie (12) à l'intérieur du corps (10), ledit axe de rotation (A) coïncidant sensiblement avec un axe (A) du dispositif (1), ladite turbine (20) comprenant un noyau central (21) à partir duquel une pluralité d'aubes (22) s'étendent, en particuliers lesdites aubes (22) étant du type hélicoïdal ;
- un diffuseur (30) disposé au-dessus de la turbine (20) par rapport à l'écoulement de fluide (F), ledit diffuseur (30) étant adapté pour transporter l'écoulement de fluide (F) vers les aubes (22) de la turbine (20),
ledit diffuseur (30) comprenant une pluralité de conduits (30C), chaque conduit (30) de ladite pluralité de conduits (30C) ayant une section sensiblement circulaire et une trajectoire sensiblement hélicoïdale,
**caractérisé par le fait que**
le nombre de ladite pluralité de conduits (30C) et le nombre de ladite pluralité d'aubes (22) sont différents, ladite pluralité de conduits (30C) comprenant un nombre de conduits (30C) qui est plus grand que le nombre d'aubes (22), en particulier ladite pluralité de conduits (30C) comprenant un nombre de conduits (30C) qui dépasse le nombre d'aubes (22) d'une unité.

2. Dispositif (1) selon la revendication 1, **caractérisé par le fait que** ledit au moins un conduit (30C) comprend une première section (31) pour l'entrée de l'écoulement de fluide (F) dans ledit conduit (30C) et une seconde section (32) pour la sortie de l'écoulement de fluide (F) dudit conduit (30C), ledit conduit (30C) devenant progressivement plus étroit dans la partie comprise entre ladite première section (31) et ladite seconde section (32).

3. Dispositif (1) selon la revendication 2, **caractérisé par le fait que** l'aire de la première section (31) du conduit (30C) est plus grande que l'aire de la seconde section (32) dudit conduit (30C).

4. Dispositif (1) selon une ou plusieurs des revendications 2 et 3, **caractérisé par le fait que** ladite première section (31) a un premier centre (31C) se trouvant sur un premier axe (A1), tandis que ladite seconde section (32) a un second centre (32C) se trouvant sur un second axe (A2), ledit premier axe (A1) et ledit second axe (A2) étant sensiblement parallèles à l'axe (A) du dispositif (1).

5. Dispositif (1) selon une ou plusieurs des revendications 2 à 4, **caractérisé par le fait que**, dans une vue latérale du diffuseur (30), une ligne droite (R) passant par ledit premier centre (31C) et ledit second centre (32C) est incidente par rapport audit axe (A) du dispositif (1).

6. Dispositif (1) selon une ou plusieurs des revendications précédentes, **caractérisé par le fait que** ledit premier centre (31C) se trouve à une première distance (d1) de l'axe (A) du dispositif (1) et ledit second centre (32C) se trouve à une seconde distance (d2) dudit axe (A) du dispositif (1), en particulier ladite première distance (d1) étant sensiblement égale à ladite seconde distance (d2).

7. Dispositif (1) selon une ou plusieurs des revendications précédentes, **caractérisé par le fait que** tous les conduits (30C) de ladite pluralité de conduits (30C) sont fait sensiblement de la même manière.

8. Dispositif (1) selon la revendication 1, **caractérisé par le fait que** lesdites aubes (22) s'étendent radialement à partir du noyau central (21) et sont reliées dans leur partie externe par une bague (23).

9. Dispositif (1) selon la revendication 8, **caractérisé par le fait que** le diamètre de la turbine (20) est tel qu'il détermine la présence d'un passage libre entre la bague (23) et le corps (10).

10. Dispositif (1) selon une ou plusieurs des revendications précédentes, **caractérisé par le fait que** ledit diffuseur (30) est associé au corps (10) à proximité de ladite première partie (11).

11. Dispositif (1) selon une ou plusieurs des revendications précédentes, **caractérisé par le fait que** le corps (10) et le diffuseur (30) sont formés de façon à s'engager l'un avec l'autre, en particulier par l'intermédiaire de moyens de raccordement mutuel, formant ainsi une unique structure compacte conjointement avec la turbine (20).

12. Dispositif (1) selon une ou plusieurs des revendications précédentes, **caractérisé par le fait qu'**il comprend des moyens de détection (24) associés à la turbine (20), qui permettent le comptage des tours de ladite turbine (20) à mesure que le fluide (F) s'écoule à travers celle-ci.

13. Machine à laver, en particulier pour un usage domestique, qui comprend un dispositif (1) selon une ou plusieurs des revendications précédentes 1 à 12.
